# EUROPÄISCHE PATENTANMELDUNG

(11) **EP 0 754 815 A1**
(43) Veröffentlichungstag der Anmeldung: **22.01.1997**
(21) Anmeldenummer: 96109120.4
(22) Anmeldetag: 07.06.1996
(51) Int. Cl.: E04C 2/36, B23K 26/00

(54) **Blechkonstruktion in Honeycombbauweise**

(30) Priorität: 19.07.1995 DE 19526338
(71) Anmelder: Fried. Krupp AG Hoesch-Krupp, 45143 Essen (DE)
(72) Erfinder: Trösken, Friedhelm, Dr., 44797 Bochum (DE)

(57) **Zusammenfassung**

Um eine Blechkonstruktion in Honeycombbauweise aus schweißgeeigneten Werkstoffen, bestehend aus wenigstens zwei durchgehenden Deckblechen (1,2) und diese verbindende Aussteifungen (3), derartig auszubilden, daß beide Deckbleche (1,2) in einfacher Weise und sicher mit den Aussteifungen (3) verschweißt werden können, sind die Aussteifungen (3) mit wenigstens einem der Deckbleche (1) durch dessen Wand (9) hindurch von außen verschweißt und die Schweißnaht (5) verläuft pendelnd um die Längserstreckung der anliegenden Kanten der Aussteifungen (3), wobei sie abschnittsweise ein- oder beidseitig neben der anliegenden Kante (10) liegt.

## Beschreibung

Die Erfindung betrifft eine Blechkonstruktion in Honeycombbauweise aus schweißgeeigneten Werkstoffen nach dem Oberbegriff des Patentanspruchs 1.

Bei Blechkonstruktionen der vorgenannten Bauweise mit geringen Abmessungen ist es üblich, die Deckbleche mit den Aussteifungen durch Kleben zu verbinden. Eine derartige Klebeverbindung besitzt jedoch nicht die Festigkeit einer Schweißverbindung.

Für größere Konstruktionen, wie beispielsweise im Schiffbau, hier spricht man von Schottbauweise, ist es bekannt, die Aussteifungen mit den Deckblechen zu verschweißen. Um die Schweißposition eindeutig führen zu können, ist es jedoch erforderlich, daß die Schweißnähte jeweils von innen angebracht werden. Daher sind die Aussteifungen (hier Schottbleche) mit Mannlöchern versehen. Diese Ausbildung beschränkt sich auf Größenordnungen, die noch von innen begehbar sind.

Der Erfindung liegt die Aufgabe zugrunde, eine Blechkonstruktion in Honeycombbauweise aus schweißgeeigneten Werkstoffen derartig auszubilden, daß beide Deckbleche in einfacher Weise und sicher mit den Aussteifungen verschweißt werden können.

Diese Aufgabe wird erfindungsgemäß mit den kennzeichnenden Merkmalen des Patentanspruchs 1 gelöst. Vorteilhafte Aus- und Weiterbildungen sind in den Patentansprüchen 2 bis 11 beschrieben. Patentanspruch 12 beschreibt ein vorteilhaftes Verfahren zum Herstellen einer derartigen Blechkonstruktion.

Die mit der Erfindung erzielten Vorteile bestehen insbesondere darin, daß eine gute und dauerhafte Schweißverbindung zwischen Aussteifungen und Deckblechen für die erfindungsgemäße Konstruktion erreicht wird. Darüber hinaus gestaltet sich die Steuerung der Schweißbahn einfach.

Ein Ausführungsbeispiel der Erfindung ist in der Zeichnung dargestellt und wird im folgenden näher beschrieben. Es zeigen
- Fig.1: den Querschnitt durch eine Blechkonstruktion in Honeycombbauweise,
- Fig.2: die Draufsicht auf eine Blechkonstruktion nach Fig. 1,
- Fig.3: eine vergrößerte Darstellung nach Fig. 2 und
- Fig.4: einen Querschnitt durch eine alternative Blechkonstruktion.

Blechkonstruktionen in Honeycombbauweise bestehen grundsätzlich aus wenigstens einem oberen Deckblech 1 und einem unteren Deckblech 2, zwischen denen, vorzugsweise senkrecht stehend, Aussteifungen angeordnet sind.

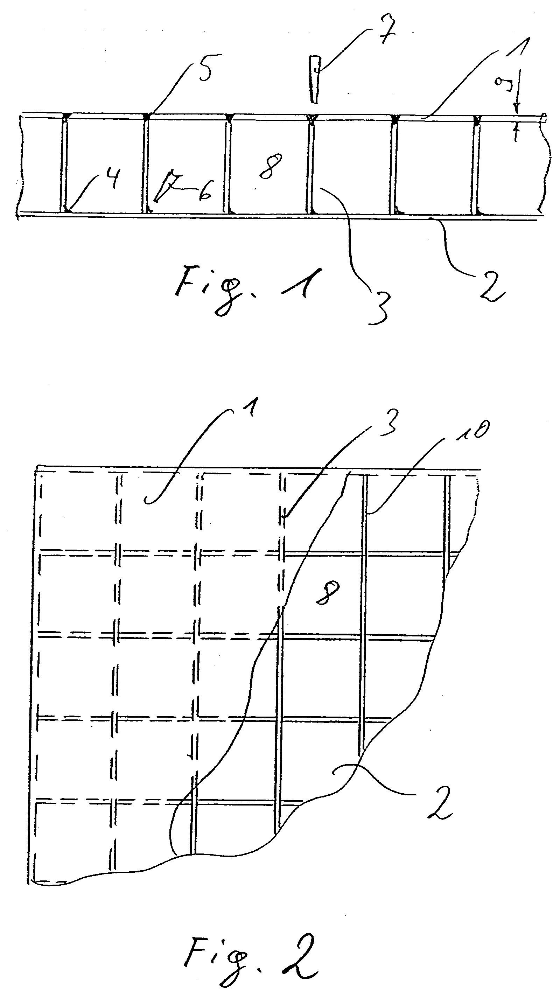

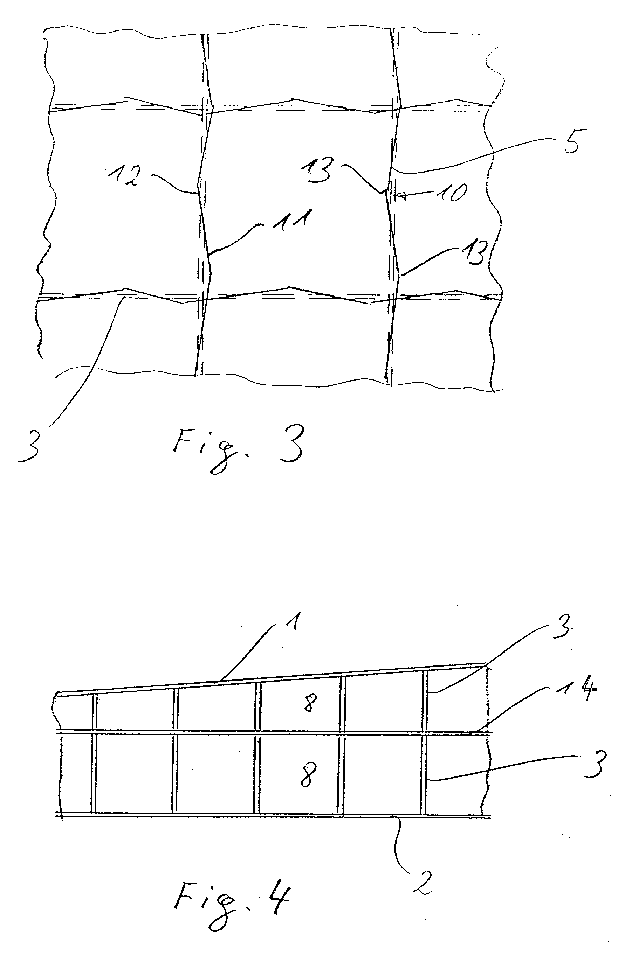

Die Fig. 1 und 2 zeigen den grundsätzlichen Aufbau einer derartigen Blechkonstruktion. Die Deckbleche 1, 2 sind parallel zueinander angeordnet, wodurch die Aussteifungen 3, die ebenfalls aus Blechen gebildet wird, eine gleichbleibende Höhe aufweist. In Fig. 1 ist eine beispielhafte Anordnung der Schweißnähte 4, 5 und der Schweißpositionen 6, 7 dargestellt. Es ist vorgesehen, daß die Schweißung automatisch, beispielsweise über Roboter oder Schweißautomaten, vorgenommen wird. Die unteren Schweißnähte 4 nach dem Ausführungsbeispiel sind als einseitige oder zweiseitige Kehlnähte ausgebildet. Die zugehörige Schweißposition 6 ist andeutungsweise durch eine Schweißgerätespitze dargestellt.

Die untere Schweißnaht 4 kann noch in der beschriebenen Weise als Kehlnaht ausgeführt werden, da, wenn sie geschweißt wird, das obere Deckblech 1 noch nicht aufliegt und somit die durch Deckblech 2 und Aussteifung 3 gebildeten Kammern 8 noch offen sind. Nach Auflage des oberen Deckblechs 1 auf das so vorbereitete Werkstück sind die Kammern 8 von innen nicht mehr zugänglich. Von daher ist nach der Erfindung vorgesehen, das obere Deckblech 1 durch seine Wand 9 hindurch mit den Aussteifungen 3 zu verschweißen. Als Problem hierbei ergibt sich die richtige Schweißnahtführung, da sich erfahrungsgemäß die anliegenden Kanten 10 der Aussteifungen 3 durch Verbiegungen oder Verspannungen nicht in der theoretisch erwarteten Position befinden. Eine Messung der Lage der Kanten 10 durch das Deckblech 1 hindurch gestaltet sich nach dem derzeitigen Stand der Technik, sofern sie überhaupt möglich ist, insbesonders bei dünnen Aussteifungen 3 sehr problematisch.

Von daher ist vorgesehen, die Schweißnaht 5 pendelnd um die Längserstreckung der anliegenden Kanten 10 der Aussteifung 3 verlaufen zu lassen, wobei sie abschnittsweise ein- oder beidseitig neben der anliegenden Kante 10 liegt. Dieses ist in Fig. 3 dargestellt. Die Pendelparameter, wie Amplitude, Form und Wellenlänge des Schweißnahtverlaufs, werden den Gegebenheiten der Konstruktion angepaßt, wie da sind: Wandstärke von Deckblech und/oder Aussteifung, Material und Toleranz der Lage der Kanten 10 sowie der sich aus der Belastung des Bauteils ergebende Schweißquerschnitt bzw. die erforderliche Schweißnahtlänge, an der die Schweißnaht im Bereich der anliegenden Kante 10 verläuft.

Ebenso wird das Schweißverfahren als solches den Gegebenheiten der Fertigungsstätte bzw. der Konstruktion angepaßt. Als Schweißverfahren eignen sich unter anderem WIG-, Plasma-, UP- oder Laserschweißen. Insbesondere das Laserschweißen ist für die erfindungsgemäße Konstruktion sehr geeignet, da es aufgrund seiner hohen Leistungsdichte einen guten Tiefschweißeffekt hat.

Wie insbesondere aus Fig. 3 erkennbar, wird eine sehr große Schweißnahtüberdeckung erzielt, auch wenn sich die Aussteifungen 3 neben der in Fig. 3 dargestellten mittleren Lage befinden. In der dargestellten mittleren Lage der Kanten 10 der Aussteifungen 3 liegt die Schweißnaht 5 abschnittsweise beidseitig neben der Kante 10. An diesen Abschnitten 11, 12 erfolgt keine Verschweißung zwischen dem Deckblech 1 und der Aussteifung 3. Die hier erzielte Schweißnahtüberdeckung wird auch erzielt, wenn die Aussteifung 3 seitlich bis zum maximalen Schweißnaht-Pendel-Umkehrpunkt 13 verschoben liegt. In diesem Fall liegt die Schweißnaht 5 abschnittsweise einseitig neben der Kante 10.

Die Erfindung beschränkt sich nicht auf die dargestellte planparallele Ausbildung der Deckbleche 1, 2. Es ist ohne weiteres möglich mit der beschriebenen Konstruktion beliebig räumlich gekrümmte Honeycombplatten herzustellen, wie dieses im Flugzeug-, Fahrzeug- oder Schiffbau erforderlich ist. Eine weitere Ausbildungsvariante wird in Fig. 4 gezeigt. Bei dieser Konstruktion handelt es sich um eine doppelte Honeycombbauweise, wie sie unter anderem bei hochbelasteten Bauteilen erforderlich sein kann. Die beschriebenen Schweißarbeitsgänge entsprechend Fig. 1 sind auch für diese Konstruktion einsetzbar.

Im übrigen wird noch darauf hingewiesen, daß selbstverständlich die Schweißausbildung entsprechend Fig. 1 und 3 nicht nur für das obere Deckblech 1 sondern auch für das untere Deckblech 2 eingesetzt werden kann. Für die Ausbildung entsprechend Fig. 4 müßten dann allerdings wenigstens einseitig am Mittelblech 14 Kehlnähte Verwendung finden.

Für die erfindungsgemäße Konstruktion eignen sich alle schweißgeeigneten Werkstoffe, wie insbesondere Eisenwerkstoffe und NE-Metall-Legierungen.

### Bezugszeichenliste

- 1.: Deckblech
- 2.: Deckblech
- 3.: Aussteifung
- 4.: Schweißnaht
- 5.: Schweißnaht
- 6.: Schweißposition
- 7.: Schweißposition
- 8.: Kammer
- 9.: Wand
- 10.: Kante
- 11.: Abschnitt
- 12.: Abschnitt
- 13.: Schweißnaht-Pendel-Umkehrpunkt
- 14.: Mittelblech

## Patentansprüche

1. Blechkonstruktion in Honeycombbauweise aus schweißgeeigneten Werkstoffen, bestehend aus wenigstens zwei durchgehenden Deckblechen (1, 2) und diese verbindende Aussteifungen (3), **dadurch gekennzeichnet,** daß die Aussteifungen (3) mit wenigstens einem der Deckbleche (1) durch dessen Wand (9) hindurch von außen verschweißt sind und die Schweißnaht (5) pendelnd um die Längserstreckung der anliegenden Kanten (10) der Aussteifungen (3) verläuft, wobei sie abschnittsweise ein- oder beidseitig neben der anliegenden Kante (10) liegt.

2. Blechkonstruktion nach Anspruch 1, **dadurch gekennzeichnet,** daß die Schweißnaht (5) zickzackförmig um die Längserstreckung der anliegenden Kanten (10) der Aussteifung (3) pendelt.

3. Blechkonstruktion nach Anspruch 1 oder Anspruch 2, **dadurch gekennzeichnet,** daß die Aussteifungen (3) aus Blech bestehen.

4. Blechkonstruktion nach einem oder mehreren der Ansprüche 1 bis 3, **dadurch gekennzeichnet,** daß die Aussteifungen (3) senkrecht auf die Deckbleche (1, 2) stoßen.

5. Blechkonstruktion nach einem oder mehreren der Ansprüche 1 bis 4, **dadurch gekennzeichnet,** daß die Deckbleche (1, 2) planparallel zueinander liegen.

6. Blechkonstruktion nach einem oder mehreren der Ansprüche 1 bis 4, **dadurch gekennzeichnet,** daß die Deckbleche (1, 2) eine beliebige Raumform aufweisen und/oder unterschiedliche Abstände zueinander haben.

7. Blechkonstruktion nach einem oder mehreren der Ansprüche 1 bis 6, **dadurch gekennzeichnet,** daß die Aussteifungen (3) gitterförmig ausgebildet sind.

8. Blechkonstruktion nach einem oder mehreren der Ansprüche 1 bis 6, **dadurch gekennzeichnet,** daß die Aussteifungen (3) nur in einer Richtung verlaufen.

9. Blechkonstruktion nach Anspruch 7 oder Anspruch 8, **dadurch gekennzeichnet,** daß die Aussteifungen (3) ein- oder mehrfach gekrümmt ausgebildet sind.

10. Blechkonstruktion nach einem oder mehreren der Ansprüche 7 bis 9, **dadurch gekennzeichnet,** daß der Gitterabstand der Aussteifungen (3) über die Länge, die Breite und/oder gegenüber den winkelversetzten Gitterwänden unterschiedlich ist.

11. Blechkonstruktion nach einem oder mehreren der Ansprüche 1 bis 10, **dadurch gekennzeichnet,** daß die Aussteifung (3) nur abschnittsweise angeordnet ist und die Deckbleche (1, 2) über die nicht von Aussteifungen (3) versehenen Abschnitte frei tragen.

12. Verfahren zum Herstellen einer Blechkonstruktion nach einem oder mehreren der Ansprüche 1 bis 11, **dadurch gekennzeichnet,** daß wenigstens eines der Deckbleche (1, 2) mit den Aussteifungen (3) durch Laserschweißen verbunden wird.
